# EUROPÄISCHE PATENTSCHRIFT

(11) **EP 2 782 812 B1**
(45) Veröffentlichungstag und Bekanntmachung des Hinweises auf die Patenterteilung: **04.01.2017**
(21) Anmeldenummer: 12797781.7
(22) Anmeldetag: 16.11.2012
(51) Int. Cl.: B62D 25/08, B62D 63/02

(54) **GRUPPE VON KRAFTFAHRZEUGEN**
GROUP OF MOTOR VEHICLES
MODULE DE VEHICULES AUTOMOBILES

(30) Priorität: 21.11.2011 DE 102011086709
(43) Veröffentlichungstag der Anmeldung: 01.10.2014
(73) Patentinhaber: Bayerische Motoren Werke Aktiengesellschaft, 80809 München (DE)
(72) Erfinder: GROSSE, Ronny, 82223 Eichenau (DE); RILL,Roland, 80807 München (DE)
(86) Internationale Anmeldenummer: PCT/EP2012/072828
(87) Internationale Veröffentlichungsnummer: WO 2013/076016

(56) Entgegenhaltungen:
- WO-A1-2006/026942
- WO-A1-2010/017754
- DE-A1- 19 860 794
- DE-A1-102008 055 738

## Beschreibung

Die Erfindung betrifft eine Gruppe von Kraftfahrzeugen nach dem Oberbegriff des Anspruchs 1.

Kraftfahrzeuge sind in Abhängigkeit von ihrer Form, ihrer Größe und/oder ihrer Preisstellung in unterschiedliche Fahrzeugklassen eingeteilt. Anstelle des Begriffs "Fahrzeugklasse" wird dabei auch der Begriff "Fahrzeugsegment" verwendet. Beispielsweise hat die Europäische Kommission folgende Fahrzeugklassen für die wettbewerbsrechtliche Marktabgrenzung definiert: Kleinstwagen, Kleinwagen, Mittelklasse, obere Mittelklasse, Oberklasse, Luxusklasse. Das Deutsche Kraftfahrt-Bundesamt unterscheidet folgende Fahrzeugklassen: Minis, Kleinwagen, Kompaktklasse, Mittelklasse, obere Mittelklasse, Oberklasse. Daneben gibt es weitere Kategorien, beispielsweise für Geländewagen, Sportwagen, Cabrios, Minivans, Mehrzweckfahrzeuge.

Zur Erhöhung der Wirtschaftlichkeit des Fertigungsprozesses verwenden Hersteller von Kraftfahrzeugen für die Rohbaukarosserien ihrer Kraftfahrzeuge so weit als möglich einheitliche Rohbaukomponenten. Siehe dazu DE 10 2008055738. Ziel ist hierbei, solche "Gleichteile" auch übergreifend bei Kraftfahrzeugen unterschiedlicher Fahrzeugklassen einzusetzen. Durch die Verwendung von Gleichteilen können im Presswerk und im Karosserierohbau die Investitionen in die Werkzeuge und Anlagen deutlich reduziert werden. Die Verwendung von Gleichteilen ist bei einigen Herstellern von Kraftfahrzeugen beispielsweise unter dem Begriff "Plattformstrategie" bekannt.

Bei Rohbau-Bodengruppen für Kraftfahrzeuge unterschiedlicher Fahrzeugklassen werden unterschiedliche Spurweiten an der Hinterachse bei gleichen Anschraubpunkten für die Hinterachse in der Regel über unterschiedliche Einpresstiefen der Hinterräder dargestellt. Hierdurch ist jedoch nur in beschränktem Maß eine Spreizung der Spurweite möglich. Ein weiteres Differenzierungsmerkmal zwischen den einzelnen Fahrzeugklassen ist die Durchladebreite, die bei umklappbaren Rückenlehnen der Fondsitze für das Durchladen von Transportgut zwischen dem Fahrgastraum und dem Kofferraum zur Verfügung steht. Sollen unterschiedliche Durchladebreiten zwischen den Fahrzeugklassen realisiert werden, so sind hierfür unterschiedliche Rohbau-Bodengruppen und/oder unterschiedliche Hinterachsen erforderlich.

Aufgabe der Erfindung ist es, einen neuen Ansatz für die Herstellung von Rohbaukarosserien für Kraftfahrzeuge unterschiedlicher Fahrzeugklassen bereitzustellen, der bei möglichst weitreichender Verwendung von Gleichteilen im hinteren Abschnitt des Rohbaus der Bodengruppe einer Kraftfahrzeugkarosserie (auch "Hinterbau" genannt) dennoch eine deutliche Differenzierung zwischen den unterschiedlichen Fahrzeugklassen ermöglicht. Die Differenzierung soll insbesondere durch eine Spreizung der Durchladebreite erfolgen.

Diese Aufgabe wird durch eine Gruppe von Kraftfahrzeugen mit den Merkmalen von Anspruch 1 gelöst.

Unter einer Gruppe von Kraftfahrzeugen ist in Zusammenhang mit der vorliegenden Erfindung die Gesamtheit von Kraftfahrzeugen zumindest einer ersten und einer zweiten Fahrzeugbaureihe zu verstehen, wobei die beiden Fahrzeugbaureihen unterschiedlichen Fahrzeugklassen angehören. Selbstverständlich können auch die Rohbaukarosserien von mehr als zwei Fahrzeugbaureihen zu einer Gruppe von Kraftfahrzeugen zusammengefasst werden.

Kerngedanke der Erfindung ist es, den Hinterbau von Kraftfahrzeugen unterschiedlicher Fahrzeugklassen so zu gestalten, dass die hinteren Längsträger in ihrem mittleren und hinteren Teilbereich einheitlich sind, also als Gleichteile ausgeführt sind. Erfindungsgemäß ist lediglich der vordere Teilbereich der hinteren Längsträger je nach Fahrzeugklasse unterschiedlich gestaltet. Vorderer und mittlerer Teilbereich der hinteren Längsträger sind durch Verschweißung zu einem einstückigen Längsträger miteinander verbunden. Durch die Verwendung der erfindungsgemäß in ihren mittleren und hinteren Teilbereichen einheitlichen Längsträger ergeben sich fahrzeugklassenübergreifend beträchtliche Einsparungen, insbesondere hinsichtlich der Investitionen für die Tiefziehwerkzeuge zur Herstellung der hinteren Längsträger in Blechschalenbauweise. Auch bei hinteren Längsträgern, die zumindest teilweise aus Strangprofilen oder Gusswerkstoffen bestehen, können durch die Vereinheitlichung von mittlerem und hinterem Teilbereich des hinteren Längsträgers beträchtliche Einsparungen erzielt werden.

Durch die Erfindung lässt sich in besonders effizienter Weise eine Breitenspreizung an der hinteren Bodengruppe der Kraftfahrzeuge der unterschiedlichen Fahrzeugklassen erreichen. Die erfindungsgemäß unterschiedlich gestalteten vorderen Teilbereiche der hinteren Längsträger weisen einen unterschiedlichen Versatz in Fahrzeugquerrichtung (Y-Richtung) auf. Auf diese Weise lassen sich im Hinterbau der Kraftfahrzeuge der einzelnen Fahrzeugbaureihen reale Breitenspreizungen erreichen, wodurch sich größere Spurweitenunterschiede realisieren lassen als durch die Variation der Einpresstiefen der Hinterräder. Durch die bei den erfindungsgemäßen Kraftfahrzeugen unterschiedlich breiten Hinterbauten ergeben sich je nach Fahrzeugklasse unterschiedlich große Abstände zwischen den Innenflächen der hinteren Radhäusem, so dass in den jeweiligen Fahrzeugklassen unterschiedliche Kofferraumvolumina und bei umklappbaren Rückenlehnen der Fondsitze unterschiedliche Durchladebreiten zwischen dem Fahrgastraum und dem Kofferraum entstehen.

In gleicher Weise kann durch die Erfindung, alternativ oder zusätzlich, eine Längenspreizung der hinteren Bodengruppe der einzelnen Kraftfahrzeuge der unterschiedlichen Fahrzeugklassen realisiert werden, indem durch unterschiedlich gestaltete vordere Teilbereiche der hinteren Längsträger eine Anpassung an unterschiedliche Lagen des so genannten Fersenblech-Querträgers in Bezug auf die Verbindungslinie durch die Radaufstandspunkte der Hinterräder erfolgt (siehe hierzu auch die unten stehenden Erläuterungen zu den Begriffen "Fersenblech" und "Fersenblech-Querträger"). Durch die unterschiedliche Gestaltung der vorderen Teilbereiche der hinteren Längsträger können unterschiedliche Lagen des Fersenblech-Querträgers in Längsrichtung der Kraftfahrzeuge (X-Richtung), zum Beispiel bedingt durch unterschiedliche große Tankvolumina in den einzelnen Fahrzeugklassen, ausgeglichen werden.

In weiterhin gleicher Weise können durch die Erfindung, alternativ oder zusätzlich, unterschiedliche Bodenfreiheiten der Kraftfahrzeuge der unterschiedlichen Fahrzeugklassen realisiert werden, indem durch unterschiedlich gestaltete vordere Teilbereiche der hinteren Längsträger eine Anpassung an unterschiedlich hohe Unterkanten der seitlichen Längsträger (Schweller) der Kraftfahrzeuge erfolgt. Somit kann durch die Erfindung ein Versatz in Höhenrichtung der Kraftfahrzeuge (Z-Richtung) ausgeglichen werden.

Bevorzugt sind in der Gruppe von Kraftfahrzeugen die Kraftfahrzeuge von zwei Fahrzeugklassen zusammengefasst. Hierbei eignet sich das erfindungsgemäße fahrzeugklassenübergreifende Konzept vor allem, jedoch nicht ausschließlich, für "benachbarte" Fahrzeugklassen, beispielsweise für Kraftfahrzeuge der Kompaktklasse und der Mittelklasse oder für Kraftfahrzeuge der Mittelklasse und der oberen Mittelklasse. Selbstverständlich kann die Gruppe von Kraftfahrzeugen auch auf mehr als zwei Fahrzeugklassen ausgedehnt werden.

Der Begriff "Gleichteil" (ebenso wie der Begriff "einheitliches Bauteil") umfasst solche Rohbauteile, die mit demselben Tiefziehwerkzeug hergestellt werden. Im Anschluss an die Herstellung im Presswerk können diese "Gleichteile" durch Verkürzen oder durch Verlängern in ihrer Längendimension verändert werden. Beim Verkürzen durch Ablängen wird beispielsweise ein Längsträger, der für Kraftfahrzeuge zweier oder mehrerer Fahrzeugklassen übergreifend eingesetzt wird, je nach Fahrzeugklasse durch Beschnitt an einem seiner Endabschnitte für die Kraftfahrzeuge der kleineren Fahrzeugklasse(n) verkürzt. Alternativ kann der Längsträger auch durch Ansetzen eines Verlängerungsstücks je nach Fahrzeugklasse verlängert werden, durch Nieten, Schweißen, Schrauben, Kleben etc. Grundsätzlich können an den "Gleichteilen" je nach Fahrzeugklasse auch unterschiedliche Lochbilder für die Verbindung des "Gleichteils" mit der Rohbaukarosserie und/oder mit Anbauteilen angebracht werden, durch Stanzen, Bohren etc. Wesentlich ist jedoch für die "Gleichteile", dass nach der Herstellung in demselben Tiefziehwerkzeug keine weiteren formgebenden Veränderungen stattfinden. Durch den Einsatz eines fahrzeugklassenübergreifend einheitlichen Tiefziehwerkzeugs werden die Investitionskosten für die Fertigungseinrichtungen maßgeblich reduziert.

In einer vorteilhaften Ausgestaltung der Erfindung sind die vorderen Teilbereiche der hinteren Längsträger unter Zwischenschaltung eines Fersenbleches und/oder eines Fersenblech-Querträgers mit einem einheitlich breiten vorderen Bodenblech verbunden. Die Kombination aus einheitlich breitem vorderen Bodenblech und unterschiedlich gestalteten vorderen Teilbereichen der hinteren Längsträger ermöglicht die äußerst wirtschaftliche Fertigung von Rohbaukarosserien für unterschiedliche Fahrzeugklassen, wobei sich die Rohbaukarosserien der einzelnen Fahrzeugklassen durch unterschiedlich breite Hinterbauten auszeichnen. Gegebenenfalls können sich die Hinterbauten der Kraftfahrzeuge der einzelnen Fahrzeugklassen zusätzlich in ihrer Länge und/oder in ihrer Bodenfreiheit unterscheiden. Außerdem unterscheiden sich die Rohbaukarosserien der einzelnen Fahrzeugklassen in der Regel durch unterschiedlich breite seitliche Längsträger (Schweller), wobei jedoch die Innenflächen der seitlichen Längsträger entsprechend dem einheitlichen vorderen Bodenblech fahrzeugklassenübergreifend einheitlich gestaltet und positionsgleich sind.

Wie bereits oben erläutert, ist hierbei maßgeblich, dass für die Rohbaukarosserien der unterschiedlichen Fahrzeugbaureihen ein als Gleichteil ausgebildetes vorderes Bodenblech zum Einsatz kommt. Dieses in seiner Breite einheitliche vordere Bodenblech kann beispielsweise durch Ablängen an unterschiedliche Fahrzeuglängen und/oder Radstände angepasst werden, ist jedoch aufgrund des einheitlichen Tiefziehvorgangs für alle Rohbaukarosserien hinsichtlich seiner Formgebung einheitlich. Durch die Verwendung desselben Tiefziehwerkzeugs für die vorderen Bodenbleche aller Rohbaukarosserien kann eine deutliche Reduktion der Investitionskosten für die Fertigungsanlagen erreicht werden.

Das vordere Bodenblech ist beispielsweise einteilig ausgeführt. Alternativ kann das vordere Bodenblech auch aus mehreren Bauteilen zusammengesetzt sein. Mit anderen Worten kann auch ein aus mehreren Bauteilen zusammengesetztes vorderes Bodenblech für die Rohbaukarosserien der unterschiedlichen Fahrzeugbaureihen einheitlich hergestellt sein, also mit denselben Tiefziehwerkzeugen und auch mit denselben Fertigungsschritten zum Fügen (bevorzugt Schweißen) der einzelnen Tiefziehteile hergestellt sein. Wie bereits oben erläutert, ist bei beiden Varianten das vordere Bodenblech für die Rohbaukarosserien der unterschiedlichen Fahrzeugbaureihen einheitlich breit.

Die hinteren Längsträger schließen nicht unmittelbar an das vordere Bodenblech an, sondern sind mit diesem mittelbar unter Zwischenschaltung eines "Fersenblechbereichs" verbunden. Dieser "Fersenblechbereich" umfasst das eigentliche Fersenblech sowie einen benachbart dazu angeordneten Fersenblech-Querträger, der die Rohbaukarosserie im Bereich der Rücksitze aussteift. Der "Fersenblechbereich" dient als Übergangsbereich zwischen den erfindungsgemäß ausgeführten einheitlichen Längsträgern und dem bevorzugt als Gleichteil ausgeführten vorderen Bodenblech.

In einer bevorzugten Ausgestaltung der Erfindung ist auch das Fersenblech als Gleichteil ausgebildet. Der Fersenblech-Querträger ist üblicherweise in Schalenbauweise ausgeführt, wobei in vorteilhafter Ausführung der Erfindung zumindest eine Schale oder zumindest ein Teil der Schalen ebenfalls als Gleichteil ausgebildet ist. Bevorzugt sind beim Fersenblech-Querträger zumindest die beiden seitlich außen liegenden Abschnitte als Gleichteile ausgeführt. Diese Abschnitte sind diejenigen Bauteile, die unmittelbar an die vorderen Teilbereiche der hinteren Längsträger anschließen.

Bevorzugt erfolgt die Verbindung zwischen seitlichem und hinterem Längsträger über Flansche an den vorderen Teilbereichen der hinteren Längsträger, die mit den seitlichen Längsträgern insbesondere durch Verschweißung verbunden sind.

Die vorderen Teilbereiche der hinteren Längsträger weisen in einer bevorzugten Ausführungsform der Erfindung eine Befestigungsvorrichtung für wenigstens eine Komponente der Hinterachse des Kraftfahrzeugs auf, beispielsweise eine Aufnahme für wenigstens einen Lenker der Hinterachse.

In einer vorteilhaften Ausgestaltung der Erfindung haben die hinteren Teilbereiche der hinteren Längsträger je nach Fahrzeugklasse eine unterschiedliche Länge. Damit werden für die Kraftfahrzeuge der einzelnen Fahrzeugbaureihen innerhalb der Gruppe von Kraftfahrzeugen hintere Längsträger für unterschiedlich lange Hinterbauten bereitgestellt. Die Längenanpassung erfolgt, wie bereits in Zusammenhang mit der Definition des Begriffs "Gleichteil" erläutert, durch Ablängen (Beschnitt) oder durch Verlängern (Anstückeln). Beim Ablängen bzw. Verlängern handelt es sich um Fertigungsschritte, die als nachträgliche Maßnahme an zuvor mit einem einheitlichen Tiefziehwerkzeug gefertigten hinteren Längsträgem vorgenommen wird. Für diese nachträglichen Maßnahmen an den hinteren Längsträger fallen nur vergleichsweise geringe Arbeits- und Werkzeugkosten an.

Zur Erhöhung der Stabilität des Hinterbaus sind die hinteren Längsträger der beiden Fahrzeugseiten bevorzugt durch einen hinteren Querträger miteinander verbunden. Der hintere Querträger ist zum Erreichen der Breitenspreizung bei den Kraftfahrzeugen der einzelnen Fahrzeugklassen unterschiedlich breit ausgeführt, wobei die unterschiedlichen Breiten bevorzugt durch Beschnitt oder Verlängerung von Gleichteilen erzeugt werden. Vorteile ergeben sich weiter durch den Einsatz "breitengespreizter" Hinterachsen, die sich aus einer möglichst großen Anzahl von Gleichteilen zusammensetzen.

In Ausgestaltung der Erfindung sind an den vorderen Teilbereichen der hinteren Längsträger Lochbilder für Wagenheberaufnahmen vorgesehen, die je nach Fahrzeugbaureihe so platziert sind, dass sich für die Lochbilder ein einheitlicher Abstand zur Fahrzeuglängsmittellinie und/oder ein einheitlicher Abstand zu vorderen Wagenheberaufnahmen ergibt. Da diese Wagenheberaufnahmen während der Endmontage der Kraftfahrzeuge als Koppelpunkte für Transportvorrichtungen dienen, mit denen die Kraftfahrzeuge entlang der Fertigungsstraße bewegt werden, können durch die Vereinheitlichung der Lochbilder für die Wagenheberaufnahmen einheitliche fahrzeugklassenübergreifend Transportvorrichtungen eingesetzt werden, woraus sich Einsparungen bei den Herstellkosten ergeben.

Die in Zusammenhang mit der vorliegenden Erfindung verwendeten Lagebezeichnungen "vorne" und "hinten" sowie davon abgeleitete Begriffe beziehen sich auf die Einbaulage der betreffenden Bauteile im Kraftfahrzeug und auf die Fahrtrichtung des Kraftfahrzeugs.

Ein mögliches Ausführungsbeispiel der Erfindung ist in der Zeichnung dargestellt und wird nachfolgend näher erläutert. Es zeigt:
- Fig. 1: eine perspektivische Ansicht auf den hinteren Abschnitt einer Rohbau-Bodengruppe eines Kraftfahrzeugs, mit schematischer Darstellung von Längen- und Breitenspreizungen des Rohbaus,
- Fig. 2: eine übereinander geschobene Draufsicht der Hinterbauten von Kraftfahrzeugen zweier unterschiedlicher Fahrzeugklassen, mit Deckungsgleichheit der Fersenblech-Querträger in X-Richtung,
- Fig. 3: eine der Fig. 2 entsprechende Darstellung, mit Deckungsgleichheit der Mitte der Hinterräder der Kraftfahrzeuge in X-Richtung und
- Fig. 4: die vorderen Teilbereiche von hinteren Längsträgern zweier Kraftfahrzeuge unterschiedlicher Fahrzeugklassen in drei verschiedenen Ansichten (Perspektive, Draufsicht und Seitenansicht).

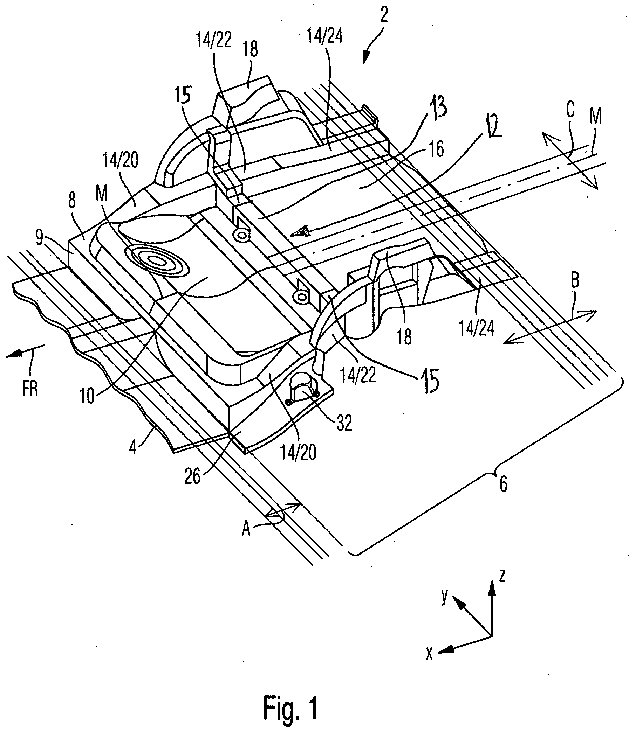

Fig. 1 zeigt in schematischer Darstellung den hinteren Bereich einer Rohbaukarosserie eines Kraftfahrzeugs. Die Fahrzeuglängsmittellinie ist mit M bezeichnet. Von der in ihrer Gesamtheit mit 2 bezeichneten Bodengruppe der Rohbaukarosserie ist ein Teilbereich des vorderen Bodenblechs 4 sowie der gesamte Hinterbau 6 dargestellt. An das vordere Bodenblech 4 schließt sich ein Fersenblech 9, ein Fersenblech-Querträger 8 sowie ein hinteres Bodenblech 10 und ein hinterer Querträger 12 an. Weiter sind hintere Längsträger 14, ein Gepäckraumboden 16 und hintere Radhausschalen 18 dargestellt. Die Fahrzeuglängsrichtung, die der Fahrtrichtung FR entspricht, ist mit X bezeichnet. Die Fahrzeugquerrichtung Y und die Fahrzeughochrichtung Z sind ebenfalls dargestellt.

Das Prinzip der Realisierung von Kraftfahrzeugen unterschiedlicher Fahrzeugklassen geht aus Fig. 1 hervor. Unterschiedliche Längen der Bodengruppe 2 lassen sich beispielsweise einerseits durch Beschnitt des vorderen Bodenblechs 4 in X-Richtung des Kraftfahrzeugs realisieren - siehe Doppelpfeil A. Das vordere Bodenblech 4 ist in seiner Breite (Y-Richtung) bevorzugt einheitlich, woraus sich eine einheitliche Position der Innenfläche nicht dargestellter seitlicher Längsträger (Schweller) ergibt. Das einheitliche vordere Bodenblech 4 ermöglicht zudem ein einheitliches Fersenblech 9 und/oder einen einheitlichen Fersenblech-Querträger 8. Der Fersenblech-Querträger 8 kann auch nur teilweise fahrzeugklassenübergreifend einheitlich ausgebildet sein, beispielsweise indem eine Schale oder einzelne Schalen eines in Blechschalenbauweise ausgeführten Fersenblech-Querträgers 8 einheitlich ausgeführt ist bzw. sind.

Außerdem kann die Länge des Hinterbaus 6 der Bodengruppe 2 durch Beschnitt der hinteren Längsträger 14 und durch Beschnitt des zwischen die hinteren Längsträger 14 eingesetzten Gepäckraumbodens 16 angepasst werden - siehe Doppelpfeil B.

Unterschiedliche Breiten des Hinterbaus 6 (Querrichtung Y des Kraftfahrzeugs) lassen sich durch erfindungsgemäß gestaltete hintere Längsträger 14 erreichen, in Verbindung mit unterschiedlich breiten Gepäckraumböden 16 sowie unterschiedlich breiten Querträgern 12 - siehe Doppelpfeil C. Im vorliegenden Ausführungsbeispiel setzen sich die Querträger 12 aus einem mittleren Abschnitt 13 sowie zwei äußeren Adapterstücken 15 zusammen. Die Adapterstücke 15 sind für die Kraftfahrzeuge aller Fahrzeugklassen identisch. Die Breitenanpassung erfolgt durch Ablängen des einheitlich gefertigten mittleren Abschnitts 13.

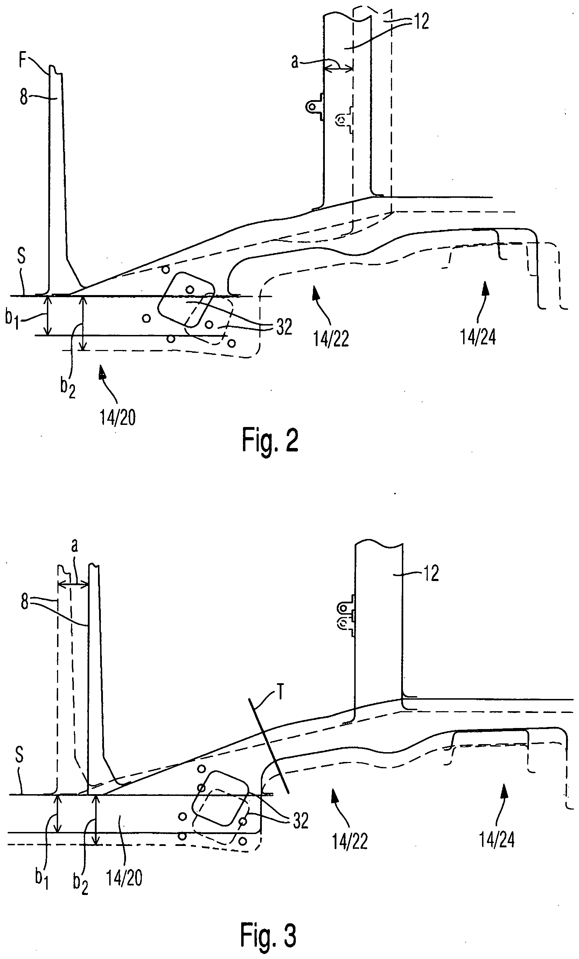

Aus den übereinander geschobenen Darstellungen der Fig. 2 und 3 ist im Detail ersichtlich, wie die Breiten- und Längenspreizung (also in Y- bzw. X-Richtung der Kraftfahrzeuge) erreicht wird. Die mit durchgezogenen Linien dargestellten Komponenten des Hinterbaus 6 sind dabei Kraftfahrzeugen einer ersten Fahrzeugbaureihe mit geringerer Breite und Länge des Hinterbaus 6 zugeordnet. Die mit gestrichelten Linien dargestellten Komponenten des Rohbaus gehören zu Kraftfahrzeugen einer zweiten Fahrzeugbaureihe, die sich durch eine größere Breite und Länge des Hinterbaus 6 auszeichnen. In den Fig. 2 und 3 ist dabei jeweils nur die linke Seite der Kraftfahrzeuge dargestellt. Die rechte Seite der Kraftfahrzeuge ist spiegelbildlich ausgeführt. Die Kraftfahrzeuge der beiden Fahrzeugbaureihen bilden zusammen die der Erfindung zugrunde liegende Gruppe von Kraftfahrzeugen.

Bei dem hinteren Längsträger 14 handelt es sich um ein Bauteil, dessen vorderer Teilbereich 20 je nach Zugehörigkeit des Kraftfahrzeugs zu einer bestimmten Fahrzeugbaureihe individuell gestaltet ist. Der hintere Längsträger 14 ist in seinem mittleren und hinteren Teilbereich 22 bzw. 24 für alle Kraftfahrzeuge der Gruppe als einstückiges Gleichteil ausgebildet, wobei die Länge des hinteren Teilbereichs 24 beispielsweise durch Beschnitt angepasst wird.

In Fig. 3 ist die Trennlinie T zwischen dem vorderen Teilbereich 20 und dem mittleren Teilbereich 22 des Längsträgers 14 dargestellt. Die beiden Teilbereiche 20 und 22 sind bevorzugt durch Verschweißung miteinander verbunden.

Durch das oben beschriebene Konzept wird eine Breitenspreizung des Hinterbaus (in Y-Richtung des Kraftfahrzeugs) erreicht, mit unterschiedlichen Abständen b₁ und b₂ der Außenkanten der hinteren Längsträger 14 zu einer einheitlichen Anlagefläche S der hinteren Längsträger 14 an der Innenseite nicht dargestellter seitlicher Längsträger. Dementsprechend unterschiedlich sind je nach Fahrzeugbaureihe die Abstände zwischen den Außenkanten der hinteren Längsträger 14 und der Fahrzeuglängsmittellinie M.

Die einheitliche Anlagefläche S geht auf das einheitliche vordere Bodenblech 4 und den hieraus resultierenden einheitlichen Fersenblech-Querträger 8 zurück.

Alternativ oder zusätzlich wird bei erfindungsgemäßer Ausführung der Kraftfahrzeuge unterschiedlicher Fahrzeugbaureihen ein Versatz a in X-Richtung (siehe Fig. 2 und 3) erzielt. Dieser Versatz a ermöglicht den Einsatz unterschiedliche langer hinterer Bodenbleche 10 und damit zum Beispiel die Unterbringung unterschiedlich großer Kraftstoffbehälter je nach Fahrzeugbaureihe. Abhängig vom Versatz a ist bei den Kraftfahrzeugen der einzelnen Fahrzeugbaureihen der Abstand zwischen den Verbindungslinien der Radaufstandspunkte der nicht dargestellten Hinterräder und den Fersenblech-Querträgern 8 unterschiedlich. Damit wirkt sich der Versatz a auf den Radstand der Kraftfahrzeuge der einzelnen Fahrzeugbaureihen aus.

Außerdem können alternativ oder zusätzlich durch Variation der vorderen Teilbereiche 20 der hinteren Längsträger 14 auch unterschiedliche Abstände zwischen den Unterkanten der hinteren Längsträger 14 und den Unterkanten der nicht dargestellten seitlichen Längsträger (in Hochrichtung Z der Kraftfahrzeuge) erzielt werden, um beispielsweise je nach Fahrzeugbaureihe die unterschiedlichen Bodenfreiheiten auszunutzen.

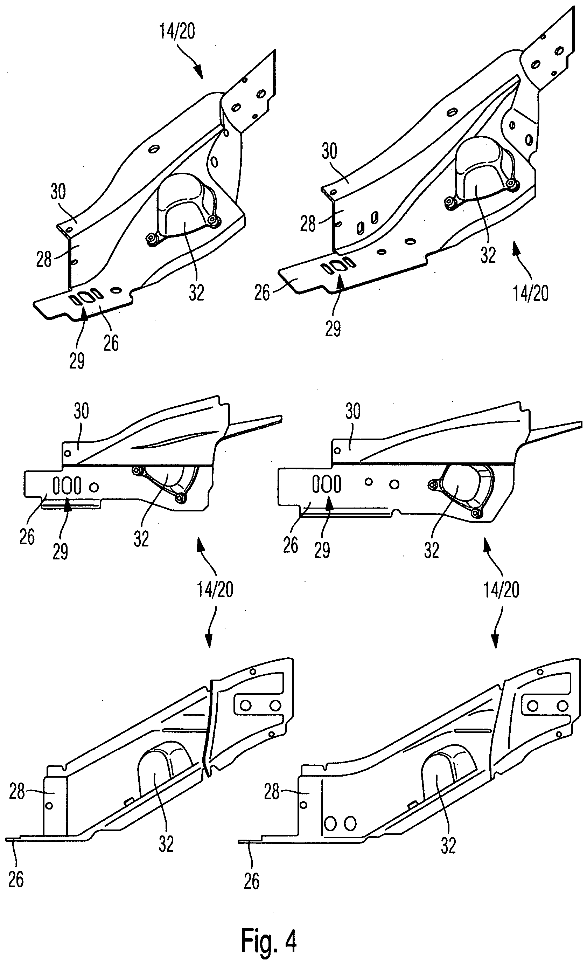

Die unterschiedlichen Geometrien der vorderen Teilbereiche 20 der hinteren Längsträger 14 der beiden Fahrzeugbaureihen gehen in verschiedenen Ansichten aus Fig. 4 hervor. Hierbei sind im linken Teil der Fig. 4 jeweils die zum Kraftfahrzeug mit geringerer Fahrzeugbreite gehörenden vorderen Teilbereiche 20 des hinteren Längsträgers 14 abgebildet.

In den Fig. 1 und 4 sind Flansche 26 an den vorderen Teilbereichen 20 der hinteren Längsträger 14 dargestellt. Die Flansche 26 schließen an die Unterseite nicht dargestellter seitlicher Längsträger der einzelnen Kraftfahrzeuge an und sind mit den seitlichen Längsträgern durch Verschweißung verbunden. Die an den Fersenblech-Querträger 12 anschließenden vertikalen und horizontalen Flächen der vorderen Teilbereiche 20 sind mit 28 und 30 bezeichnet. Über die Flächen 28 und 30 wird der Längsträger 14 mit dem Fersenblech-Querträger 8 verschweißt. Die Fläche 28 entspricht der in den Fig. 2 und 3 dargestellten Anlagefläche S.

Die Flansche 26 an den vorderen Teilbereichen 20 der hinteren Längsträger 14 weisen ein Lochbild 29 auf, das nicht dargestellten Wagenheberaufnahmen an der Unterseite der seitlichen Längsträger zugeordnet ist. Diese Wagenheberaufnahmen dienen während der Endmontage der Kraftfahrzeuge als Koppelpunkte für Transportvorrichtungen, mit denen die Kraftfahrzeuge entlang der Fertigungsstraße bewegt werden.

Wie insbesondere aus den beiden mittleren Darstellungen der Fig. 4 (Draufsicht) hervorgeht, sind die Lochbilder 29 an den Flanschen 26 so platziert, dass sowohl für die Kraftfahrzeuge mit geringerer Fahrzeugbreite (und geringerer Fahrzeuglänge entsprechend dem Versatz entlang des Doppelpfeils A in Fig. 1) als auch für die Kraftfahrzeuge mit größerer Fahrzeugbreite (und größerer Fahrzeuglänge entsprechend dem Versatz entlang des Doppelpfeils A in Fig. 1) eine einheitliche Position des Lochbildes 29 erreicht wird, sowohl in Bezug auf die Fahrzeuglängsmittellinie M (Y-Richtung) als auch in Bezug auf den Abstand zu nicht dargestellten vorderen Wagenheberaufnahmen (X-Richtung). Selbstverständlich kann sich die Vereinheitlichung des Lochbildes 29 auch nur auf eine Richtung beschränken, bevorzugt auf die Y-Richtung.

Bei beiden Fahrzeugbaureihen wird eine einheitliche Befestigungsvorrichtung (Aufnahmetopf 32) zur Befestigung von nicht dargestellten Lenkern der Hinterachse eingesetzt.

Die Erfindung lässt sich wie folgt zusammenfassen: Bei Kraftfahrzeugen wenigstens zweier verschiedener Fahrzeugbaureihen, die unterschiedlichen Fahrzeugklassen zuzuordnen sind, wird eine besonders wirtschaftliche Herstellung der Rohkarosserie der Kraftfahrzeuge erreicht, indem nur der vordere Teilbereich 20 der hinteren Längsträger 14 je nach Fahrzeugklasse unterschiedlich gestaltet ist. Der mittlere. und der hintere Teilbereich 22 bzw. 24 der hinteren Längsträger 14 ist fahrzeugklassenübergreifend einheitlich ausgeführt. Somit können für alle Kraftfahrzeuge durchgängig einheitliche mittlere und hintere Teilbereiche 22 und 24 des Längsträgers 14 verwendet werden. Durch die Erfindung wird eine Variation der Fahrzeugbreite und/oder der Durchladebreite und/oder der Spurweite und/oder der Länge und/oder der Bodenfreiheit im Hinterbau 6 des Kraftfahrzeugs ermöglicht, wobei nur die vorderen Teilbereiche 20 der Längsträger 14 individuell je nach Fahrzeugklasse zu gestalten sind.

## Patentansprüche

1. Gruppe von Kraftfahrzeugen, bestehend aus Kraftfahrzeugen wenigstens zweier Fahrzeugbaureihen, die unterschiedlichen Fahrzeugklassen angehören, mit jeweils einer hinteren Bodengruppe mit zwei seitlichen hinteren Längsträgern, **dadurch gekennzeichnet, dass** die hinteren Längsträger (14) für die Kraftfahrzeuge beider Fahrzeugbaureihen einheitliche mittlere und hintere Teilbereiche (22, 24) aufweisen, während die vorderen Teilbereiche (20) der hinteren Längsträger (14) für die Kraftfahrzeuge der beiden Fahrzeugbaureihen unterschiedlich sind, wobei vorderer und mittlerer Teilbereich (20, 22) durch Verschweißung miteinander verbunden und die vorderen Teilbereiche (20) so gestaltet sind, dass sich in Abhängigkeit von den vorderen Teilbereichen (20) an den Kraftfahrzeugen der beiden Fahrzeugbaureihen
• zwischen den Innenflächen der hinteren Radhäuser der Kraftfahrzeuge unterschiedliche Abstände in Querrichtung (Y) der Kraftfahrzeuge und/oder
• zwischen den Verbindungslinien der Radaufstandspunkte der Hinterräder und den Fersenblech-Querträgern (10) unterschiedliche Abstände in Längsrichtung (X) der Kraftfahrzeuge und/oder
• zwischen den Unterkanten der hinteren Längsträger (14) und den Unterkanten seitlicher Längsträger der Kraftfahrzeuge unterschiedliche Abstände in Hochrichtung (Z) der Kraftfahrzeuge ergeben.

2. Gruppe von Kraftfahrzeugen nach Anspruch 1,
**dadurch gekennzeichnet, dass** die vorderen Teilbereiche (20) der hinteren Längsträger (14) unter Zwischenschaltung eines Fersenbleches (9) und/oder eines Fersenblech-Querträgers (8) an ein einheitlich breites vorderes Bodenblech (4) der Kraftfahrzeuge anschließen.

3. Gruppe von Kraftfahrzeugen nach Anspruch 2,
**dadurch gekennzeichnet, dass** das Fersenblech (9) und/oder der Fersenblech-Querträger (8) oder Bestandteile des Fersenblech-Querträgers (8) bei den Kraftfahrzeugen der beiden Fahrzeugbaureihen einheitlich ausgeführt sind.

4. Gruppe von Kraftfahrzeugen nach einem der vorangegangenen Ansprüche, **dadurch gekennzeichnet, dass** die vorderen Teilbereiche (20) der hinteren Längsträger (14) eine Befestigungsvorrichtung (32) für eine Komponente der Hinterachse des Kraftfahrzeugs aufweisen.

5. Gruppe von Kraftfahrzeugen nach einem der vorangegangenen Ansprüche, **dadurch gekennzeichnet, dass** der hintere Teilbereich (24) der hinteren Längsträger (14) bei den Kraftfahrzeugen der beiden Fahrzeugbaureihen eine unterschiedliche Länge aufweist.

6. Gruppe von Kraftfahrzeugen nach einem der vorangegangenen Ansprüche, **dadurch gekennzeichnet, dass** die hinteren Längsträger (14) in ihrem mittleren Teilbereich (22) über einen Querträger (12) miteinander verbunden sind.

7. Gruppe von Kraftfahrzeugen nach einem der vorangegangenen Ansprüche, **dadurch gekennzeichnet, dass** die vorderen Teilbereiche (20) der hinteren Längsträger (14) ein Lochbild (29) für eine Wagenheberaufnahme aufweisen, das bei den Kraftfahrzeugen der beiden Fahrzeugbaureihen derart platziert ist, dass sich ein einheitlicher Abstand zur Fahrzeuglängsmittelline (M) und/oder ein einheitlicher Abstand zu vorderen Wagenheberaufnahmen ergibt.

## Claims

1. A group of motor vehicles, comprising motor vehicles of at least two vehicle series which belong to different vehicle classes, with a respective floor assembly having two lateral rear longitudinal members,
**characterised in that** the rear longitudinal members (14) have uniform centre and rear portions (22, 24) for the motor vehicles of the two vehicle series, while the front portions (20) of the rear longitudinal members (14) are different for the motor vehicles of the two vehicle series, wherein the front and centre portions (20, 22) are joined together by welding and the front portions (20) are configured so that, subject to the front portions (20) on the motor vehicles of both vehicle series,
• different distances are produced in the transverse direction (Y) of the motor vehicles between the inner surfaces of the rear wheel wells of the motor vehicles and/or
• different distances are produced in the longitudinal direction (X) of the motor vehicles between the connecting lines of the wheel contact points of the rear wheels and the heel plate cross members (10) and/or
• different distances are produced in the vertical direction (Z) of the motor vehicles between the lower edges of the rear longitudinal members (14) and the lower edges of lateral longitudinal members of the motor vehicles.

2. A group of motor vehicles according to claim 1,
**characterised in that** the front portions (20) of the rear longitudinal members (14) adjoin a uniformly wide front floor panel (4) of the motor vehicles, with the interconnection of a heel plate (9) and/or of a heel plate cross member (8).

3. A group of motor vehicles according to claim 2,
**characterised in that** the heel plate (9) and/or the heel plate cross member (8) or components of the heel plate cross member (8) are configured uniformly in the motor vehicles of the two vehicle series.

4. A group of motor vehicles according to any one of the preceding claims, **characterised in that** the front portions (20) of the rear longitudinal members (14) have a fastening device (32) for a component of the rear axle of the motor vehicle.

5. A group of motor vehicles according to any one of the preceding claims, **characterised in that** the rear portion (24) of the rear longitudinal members (14) has a different length in the motor vehicles of the two vehicle series.

6. A group of motor vehicles according to any one of the preceding claims, **characterised in that** the rear longitudinal members (14) are interconnected in their centre portion (22) by a cross member (12).

7. A group of motor vehicles according to any one of the preceding claims, **characterised in that** the front portions (20) of the rear longitudinal members (14) have a hole pattern (29) for a jacking point which, in the motor vehicles of the two vehicle series, is positioned such that a uniform distance is produced from the longitudinal centre line (M) of the vehicle and/or a uniform distance is produced from front jacking points.

## Revendications

1. Bloc de véhicules constitués par des véhicules d'au moins deux gammes de fabrication de véhicules qui appartiennent à différentes classes de véhicules, comprenant chacun un bloc de plancher arrière ayant deux longerons latéraux arrières,
**caractérisé en ce que**
les longerons arrières (14) destinés aux véhicules des deux gammes de fabrication de véhicules comportent des parties médianes et arrières (22, 24) uniformes tandis que les parties avant (20) des longerons arrières (14) sont différentes pour les véhicules des deux gammes de fabrication de véhicules, les parties avant et médianes (20, 22) étant reliées par soudage et les parties avant (20) étant conformées de manière à obtenir, en fonction des parties avant (20) sur les véhicules des deux gammes de fabrication de véhicules,
- des distances différentes dans la direction transversale (Y) des véhicules entre les surfaces internes des passages de roues arrières des véhicules, et/ou
- des distances différentes dans la direction longitudinale (X) des véhicules entre les lignes de jonction des points de contact au sol des roues arrières et les entretoises de tôle de talon (10), et/ou
- des distances différentes dans la direction de la hauteur (Z) des véhicules entre les bords inférieurs des longerons arrières (14) et les bords inférieurs des longerons latéraux des véhicules.

2. Bloc de véhicules conforme à la revendication 1,
**caractérisé en ce que**
les parties avant (20) des longerons arrières (14) se connectent à une tôle de plancher avant (4) de largeur uniformes des véhicules avec interposition d'une tôle de talon (9) et/ou d'une entretoise de tôle de talon (8).

3. Bloc de véhicules conforme à la revendication 2,
**caractérisé en ce que**
la tôle de talon (9) et/ou l'entretoise de tôle de talon (8) ou des composants de cette entretoise de tôle de talon (8) est(sont) réalisé(es) de façon uniforme pour les véhicules des deux gammes de fabrication de véhicules.

4. Bloc de véhicules conforme à l'une des revendications précédentes, **caractérisé en ce que**
les parties avant (20) des longerons arrières (14) comportent un dispositif de fixation (32) d'un composant de l'essieu arrière du véhicule.

5. Bloc de véhicules conforme à l'une des revendications précédentes, **caractérisé en ce que**
la partie arrière (24) des longerons arrières (14) a une longueur différente pour les véhicules des deux gammes de fabrication de véhicules.

6. Bloc de véhicules conforme à l'une des revendications précédentes, **caractérisé en ce que**
les longerons arrières (14) sont reliés entre eux par une entretoise (12) à leur partie médiane (22).

7. Bloc de véhicules conforme à l'une des revendications précédentes, **caractérisé en ce que**
les parties avant (20) des longerons arrières (14) comportent un gabarit de trou (29) pour la réception d'un cric qui, pour les véhicules des deux gammes de fabrication de véhicules est positionné de façon à obtenir une distance uniforme par rapport à l'axe longitudinal médian (M) du véhicule et/ou une distance uniforme par rapport au logement de cric avant.
